# EUROPÄISCHE PATENTSCHRIFT

(11) **EP 1 026 862 B1**
(45) Veröffentlichungstag und Bekanntmachung des Hinweises auf die Patenterteilung: **06.05.2004**
(21) Anmeldenummer: 00101928.0
(22) Anmeldetag: 01.02.2000
(51) Int. Cl.: H04L 25/49

(54) **Kommunikation zwischen Pumpe und Heizkessel**
Communication between pump and boiler
Communication entre pompe et chaudière

(30) Priorität: 01.02.1999 DE 19903779
(43) Veröffentlichungstag der Anmeldung: 09.08.2000
(73) Patentinhaber: WILO AG, 44263 Dortmund (DE)
(72) Erfinder: Kettner, Thorsten, 45711 Datteln (DE); Strelow, Günter, 44801 Bochum (DE)
(74) Vertreter: COHAUSZ DAWIDOWICZ HANNIG & PARTNER

(56) Entgegenhaltungen:
- EP-A- 0 823 774

## Beschreibung

Die Erfindung betrifft ein Verfahren zur Kommunikation zwischen zwei über eine Leitung verbundenen elektronischen Geräten, wobei auf der Leitung ein gepulstes Signal anliegt, dessen Pulsdauer und/oder dessen Frequenz in einem Bereich zwischen jeweils einem Minimum und einem Maximum regelbar ist, wobei eine bestimmte Pulsdauer den Wert einer Zustandsgröße repräsentiert. Gleichzeitig betrifft die Erfindung ein System zur Durchführung des Verfahrens.

Zur Kommunikation zwischen zwei elektronischen Geräten sind diverse Verfahren bekannt. So werden Verfahren der parallelen oder der seriellen Datenübertragung verwendet. Alle bekannten Verfahren sind geeignet, komplexe Informationen unter den Geräten auszutauschen. Gleichzeitig gehen sie jedoch mit einem erheblichen Aufwand zur (De)Kodierung der Information einher und sind für den Einsatz bei einfachen im Haushalt verwendeten Geräten uninteressant. Dennoch nimmt der Bedarf am Informationsaustausch auch im Hinblick auf derartige Geräte zu.

So ist es beispielsweise bekannt, den Heizkessel eines Heizungssystemes mit der Heizungspumpe über eine einfache Datenleitung zu verbinden und auf der Leitung ein in der Pulsweite moduliertes Signal anzulegen. Dabei repräsentiert das anliegende Signal eine Zustandsgröße, während der Wert der Zustandsgröße durch den Wert der Pulsweite, die im Bereich zwischen etwas über 0% und beinahe 100% der maximalen Pulsweite variierbar ist, repräsentiert ist. Das Problem an dieser besonders einfachen Form des Informationsaustausches ist, daß nur eine einzige vorgegebene Zustandsgröße in ihrem entsprechenden Wert übertragen werden kann. Diese besonderen Geräte sind dabei in einem Frequenzbereich von etwa 100 Hz bis 10000 Hz sensibel.

Aufgabe der Erfindung ist es daher, ein einfaches und kostengünstig durchführbares Verfahren zur Kommunikation zwischen zwei elektronischen Geräten zu schaffen, das den Austausch nicht nur einer sondern mehrerer Zustandsgrößen bei hoher Übertragungsqualität zuläßt. Gleichzeitig ist es Aufgabe der Erfindung ein System zur Anwendung des Verfahrens zu schaffen.

Diese Aufgaben werden durch ein Verfahren nach den Ansprüchen 1 und 2, sowie durch das System nach den Anspruch 5 gelöst.

Besonderer Vorteil des erfindungsgemäßen Verfahrens und des entsprechenden Systemes ist, daß die technisch einfach zu realisierende Kommunikation mittels eines Pulsweiten modulierten ("PWM") Signales zur Übertragung komplexerer Information genutzt werden kann. Insbesondere bedarf es keines besonders hohen technischen Aufwandes, um die bislang vorhandenen und generell für eine solche Kommunikation geeigneten Geräte zur Durchführung der erfindungsgemäßen Kommunikation aufzurüsten. Für eine solche Datenübertragung, die über eine einzige Leitung erfolgen kann, sind lediglich einfache Bauteile wie Counter/Timer Module oder einfache Analog/Digital-Wandler nötig. Das Verfahren läßt sich demnach kostengünstig durchführen. Für die Durchführung läßt sich eine einfache und entsprechend kostengünstige, beispielsweise zwei oder drei Adern aufweisende, Leitung verwenden.

Bei der Durchführung des Verfahrens sind zwei alternative Methoden denkbar. So ist es einerseits möglich, den gesamten Bereich der möglichen Pulsweiten bei einer vorgegebenen Frequenz in einzelne Teilbereiche aufzuteilen und jedem Teilbereich eine andere Zustandsgröße zuzuordnen. Dabei variiert der Wert der Zustandsgröße innerhalb der Pulsweite des Teilbereiches. So kann beispielsweise der Teilbereich von 10% bis 45% der Pulsweite die eine und der Teilbereich von 55 bis 95% der Pulsweite die andere Zustandsgröße repräsentieren. Die Größe der übertragungsfrequenz spielt dabei keine Rolle und bleibt daher unberücksichtigt. Diese sehr einfache Methode geht mit einem gewissen Verlust an Auflösung - im vorliegenden Beispiel von ca. 50%- einher.

Dem Problem des Verlustes an Auflösung kann in einer alternativen Methode dadurch begegnet werden, daß der zur Übertragung der Signale verfügbare Frequenzbereich, der bei den hier vorliegenden Geräten im Bereich zwischen etwa 100 Hz und 10000 Hz liegt, in mehrere diskrete Frequenzteilbereiche (Spektralbereiche) aufgeteilt wird, wobei jeweils einem Spektralbereich eine Zustandsgröße zugeordnet wird. Die Art Zustandsgröße ist dabei durch den jeweiligen Frequenzbereich charakterisiert, während der Wert der Zustandsgröße - wie oben- durch die Variation innerhalb der möglichen Pulsweite von etwas über 0% bis etwas unter 100% dargestellt wird. Dabei können Frequenzunterschiede in einem groben Raster auf technisch einfache Weise nur unter Zuhilfenahme von Counter/Timer-Modulen identifiziert werden. Es muß letztendlich nur festgestellt werden, in welchem Frequenzbereich die Frequenz der PWM-Signale liegt.

In einer besonders vorteilhaften Art des Verfahrens werden die Teilbereiche der Pulsweiten oder die Spektralbereiche der Frequenzen von Trennzonen oder Trennbereichen begrenzt, in denen keine Änderung der Frequenz oder der Pulsweite stattfindet. Diese Trennbereiche sind sozusagen aus dem Spektrum ausgeblendet. Über diese Trennbereiche können binäre Zustände wie Störungen oder Statusmeldungen übertragen werden. Gleichzeitig tragen die Trennbereiche zu einer erhöhten Trennschärfe bei, so daß die einzelnen Zustandsgrößen auch in den Randbereichen mit höherer Sicherheit identifiziert werden können.

Vorteilhafterweise wird das erfindungsgemäße Verfahren zur Übertragung von Information zwischen einer Heizungspumpe und einem Heizkessel genutzt. Ein solcher Informationsaustausch führt bei heute bekannten Heizungsanlagen zu enormen Vorteilen. So ist es beispielsweise auf einfache Weise möglich, die Kesselleistung an die Pumpenleistung anzupassen. Durch eine derartige Leistungsanpassung ist eine große Energieeinsparung im System möglich. In einer besonders vorteilhaften Ausführungsform ist das zu beheizende Gebäude mit mehreren dezentralen Pumpen ausgerüstet. Dabei wird ein abtrennbarer Raum mit einem Heizkörper von jeweils einer Pumpe versorgt. Über diese dezentralen Pumpen kann die Information über Zustandsgrößen direkt zum Heizkessel übertragen werden, so daß sich dieser in seiner Heizleistung auf den jeweiligen Bedarf einstellen kann. Gleichzeitig können den Pumpen Informationen vom Heizkessel übermittelt werden, damit diese ihre Fördermenge auf das entsprechende Angebot einstellen können.

Vorteilhafterweise repräsentiert einer der Teilbereiche innerhalb der möglichen Pulsweiten und/oder einer der Spektralbereiche die Pumpendrehzahl. Diese kann der Pumpe vom Heizkessel vorgegeben werden oder zum Heizkessel übertragen werden. Dadurch ist eine gute Leistungsanpassung und damit eine optimale Energieeinsparung möglich. Als weitere Zustandsgrößen können die Förderhöhe, der Durchfluß, eine Raumtemperatur oder eine diskrete Leistungsstufe der Pumpe übertragen werden. Über diese Zustandsgrößen ist das System mit ausreichender Vollständigkeit beschrieben.

Das erfindungsgemäße Verfahren wird im folgenden anhand der Zeichnungen näher beschrieben. Es zeigen:
- **Figur 1**: ein Wohnhaus mit drei Verbrauchern (Räumen) und
- **Figur 2**: ein Schema einer Aufteilung des Pulsweiten und des Frequenzbereiches.

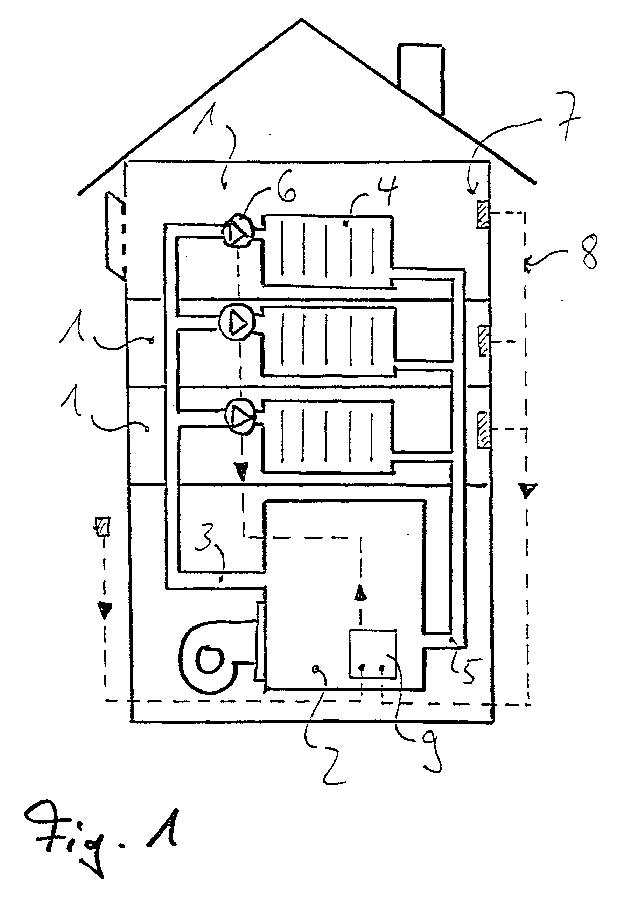

In Figur 1 ist schematisch ein Wohnhaus mit drei Etagen und einem Keller gezeigt. Das Wohnhaus mit mehreren Räumen (Verbrauchern) 1 wird von einer Zentralheizung versorgt, deren Heizkessel 2 mit Brenner sich im Keller befindet. In jedem Raum 1 ist ein über einen Vorlauf 3 an den Heizkessel angeschlossener Heizkörper 4 angeordnet. Der Rücklauf 5 aus allen Heizkörpern mündet wiederum im Heizkessel 2. Der Durchfluß des heißen Wassers durch die Heizkörper wird von elektrisch betriebenen Kreiselpumpen 6 bewerkstelligt, die in diesem vorteilhaften Ausführungsbeispiel dezentral im jeweiligen Vorlauf eines Heizkörpers 4 angebracht sind. Die Schaltelektronik einer jeden Pumpe 6 beinhaltet eine intelligente Schaltung, der Sollgrößen vorgebbar sind und die Zustandsgrößen wie die vom Sensor 7 gemessene Raumtemperatur registriert.

Die Größen werden über eine zwischen einer dem Heizkessel zugeordneten Steuereinheit 9 und den Pumpen befindliche Signalleitung 8 übertragen. Die Steuereinheit 9 verarbeitet die von den Pumpen 6 übertragenen Temperaturen und gibt dem Heizkessel 2 eine Leistung vor. Im vorliegenden Beispiel können auf der Signalleitung 8 die Größen Drehzahl N, Förderhöhe H, Durchfluß Q und Raumtemperatur T übertragen werden.

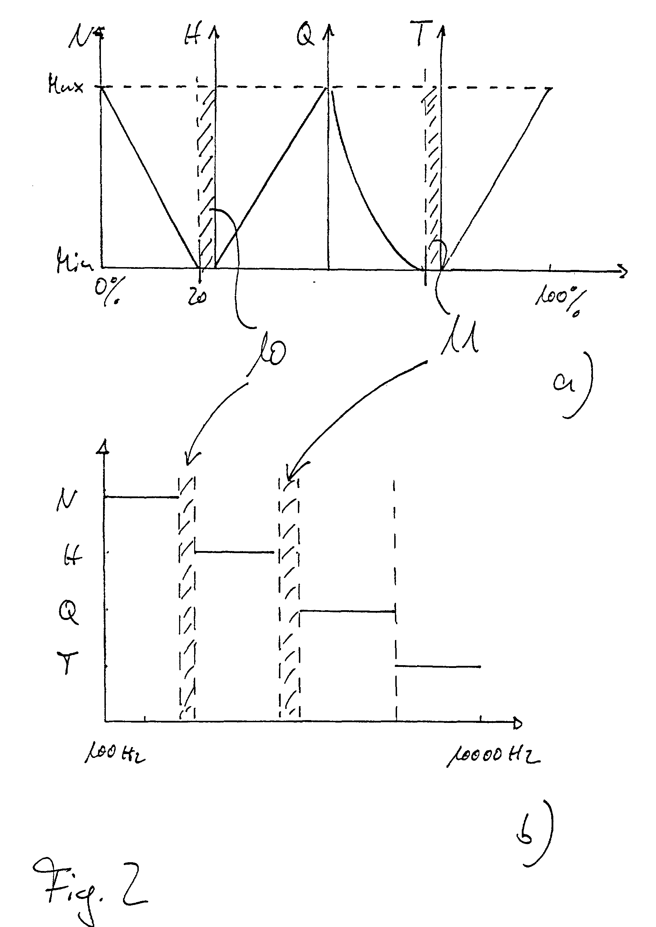

Die Information kann dabei nach dem in Figur 2a gezeigten Schema kodiert werden. Auf der Ordinate ist die Pulsweite von der Weite 0% bis 100% aufgetragen. Von 0% bis etwa 20% der maximalen Pulsweite wird die Pumpendrehzahl in linearer Abhängigkeit übertragen. Im Pulsweitenbereich von 20% bis etwa 25% schließt sich ein Trennbereich 10 an, der eine Störung repräsentiert. In den Pulsweitenbereichen von 25% bis etwa 50% wird die Förderhöhe und zwischen 50% und 70% der Durchfluß in exponentieller Abhängigkeit übertragen. Daran schließt sich wiederum ein Trennbereich 11 an, bevor der Pulsweitenbereich zur Übertragung der Raumtemperatur folgt.

Die Information kann gleichfalls durch das in Figur 2b gezeigte Schema kodiert sein. Auf der Ordinate ist in logarithmischer Skala die Frequenz zwischen 100 Hz und 10 kHz aufgetragen. Einzelne Spektralbereiche repräsentieren wiederum die Größen N, H, Q und T, wobei Trennbereiche 10 und 11 vorgesehen sind. Die Werteübertragung für die verschiedenen Zustandsgrößen erfolgt jeweils über eine Variation der Pulsweite, die in diesem Falle die gesamte möglich Pulslänge von etwas über 0% und knapp 100% umfassen kann. Ein Verlust der Auflösung ist damit nicht gegeben.

## Patentansprüche

1. Verfahren zur Kommunikation zwischen zwei über eine Leitung verbundenen elektronischen Geräten, wobei auf der Leitung ein gepulstes Signal vorgebbarer Frequenz anliegt, dessen Pulsdauer in einem Bereich zwischen einem Minimum und einem Maximum wählbar ist, wobei die Pulsdauer den Wert einer zu übertragenden Zustandsgröße repräsentiert,
**dadurch gekennzeichnet, daß** der Bereich zwischen dem Minimum und dem Maximum der Pulsdauer in mindestens zwei diskrete Teilbereiche aufgeteilt wird und daß jedem der Teilbereiche jeweils eine Zustandsgröße zugeordnet wird, wobei der Wert einer Zustandsgröße durch die innerhalb des Teilbereiches variierbare Pulsdauer repräsentiert wird.

2. Verfahren zur Kommunikation zwischen zwei über eine Leitung verbundenen elektronischen Geräten, wobei auf der Leitung ein gepulstes Signal vorgebbarer Frequenz anliegt, dessen Pulsdauer in einem Bereich zwischen einem Minimum und einem Maximum wählbar ist, wobei die Pulsdauer den Wert einer zu übertragenden Zustandsgröße repräsentiert,
**dadurch gekennzeichnet, daß** der Frequenzbereich, in dem das Signal variierbar ist, in mindestens zwei diskrete Teilbereiche aufgeteilt wird und daß jedem der Teilbereiche jeweils eine Zustandsgröße zugeordnet wird, wobei der Wert einer Zustandsgröße durch die innerhalb des Teilbereiches variierbare Pulsdauer repräsentiert wird.

3. Verfahren nach Anspruch 1 oder 2,
**dadurch gekennzeichnet, daß** am Rand eines Teilbereiches Trennzonen (10,11) vorgesehen sind, denen singuläre Zustände, wie Fehlermeldungen, zugeordnet werden.

4. Verfahren nach einem der Ansprüche 1 bis 3,
**dadurch gekennzeichnet, daß** eines der elektronischen Geräte ein Heizkessel (2) mit einer Steuerelektronik und das andere eine elektronisch geregelte Heizungspumpe (6) ist.

5. System mit einem aktiven Wärmeübertrager, insbesondere einem Heizkessel, und einer Flüssigkeitspumpe, bei dem der Wärmeübertrager und die Pumpe über eine Signalleitung anhand gepulster Signale Information austauschen, wobei die Information in der Pulsweite kodiert ist, **dadurch gekennzeichnet, daß** der Bereich möglicher Pulsweiten in diskrete Teilbereiche aufgeteilt ist und/oder
daß der Frequenzbereich, in dem das Signal übertragbar ist, in diskrete Teilbereiche aufgeteilt ist, wobei einem Teilbereich eine bestimmte Zustandsgröße zugeordnet ist und wobei der Wert der Zustandsgröße durch die innerhalb des Teilbereiches variierbare Pulsdauer repräsentiert ist.

6. System nach Anspruch 5, **dadurch gekennzeichnet, daß** ein Teilbereich die Pumpendrehzahl repräsentiert, die vom Heizkessel (2) der Pumpe (6) vorgebbar ist und/oder die von der Pumpe (6) zum Heizkessel (2) übertragbar ist.

7. System nach einem der Ansprüche 5 oder 6,
**dadurch gekennzeichnet, daß** durch einen Teilbereich die Förderhöhe, der Durchfluß, eine Raumtemperatur oder die Leistungsstufe der Pumpe (6) repräsentiert ist.

8. System nach einem der Ansprüche 5 bis 7,
**dadurch gekennzeichnet, daß** neben den Teilbereichen Trennzonen (10,11) liegen, deren zugeordnete Pulsweite oder Frequenz definierte Zustände, insbesondere Störungen, repräsentieren.

9. System nach einem der Ansprüche 5 bis 8,
**dadurch gekennzeichnet**, daßderHeizkessel(2)mit mehreren Pumpen (6) kommuniziert, wobei insbesondere einem einzelnen Raum (1) eine gesonderte Pumpe (6) zugeordnet ist, die zur Versorgung eines in dem Raum befindlichen Heizkörpers (2) mit Heißwasser eingesetzt wird.

## Claims

1. Method of communication between two electronic units connected by means of a line, in which a pulsed signal of predeterminable frequency is applied to the line, its pulse duration being adjustable within a range between a minimum and a maximum and representing the value of a state variable to be transmitted,
**characterized in that** the range between the minimum and the maximum of the pulse duration is subdivided into at least two discrete sub-ranges, and **in that** a state variable is respectively associated with each of the sub-ranges, the value of a state variable being represented by the pulse duration which can be varied within the sub-range.

2. Method of communication between two electronic units connected by means of a line, in which a pulsed signal of predeterminable frequency is applied to the line, its pulse duration being adjustable within a range between a minimum and a maximum and representing the value of a state variable to be transmitted,
**characterized in that** the frequency range, within which the signal can be varied, is subdivided into at least two discrete sub-ranges, and **in that** a state variable is respectively associated with each of the sub-ranges, the value of a state variable being represented by the pulse duration which can be varied within the sub-range.

3. Method according to Claim 1 or 2,
**characterized in that,** at the edge of a sub-range, separation zones (10, 11) are provided, with which singular states, such as error reports, are associated.

4. Method according to one of Claims 1 to 3,
**characterized in that** one of the electronic units is a heating boiler (2) with control electronics, and the other is an electronically controlled heating pump (6).

5. System with an active heat exchanger, in particular a heating boiler, and a fluid pump, in which the heat exchanger and the pump exchange information via a signalling line by means of pulsed signals, the information being coded in the pulse width, **characterized in that** the range of possible pulse widths is subdivided into discrete sub-ranges, and/or **in that** the frequency range, in which the signal can be transmitted, is subdivided into discrete sub-ranges, a specific state variable being associated with one sub-range and the value of the state variable being represented by the pulse duration which can be varied within the sub-range.

6. System according to Claim 5, **characterized in that** one sub-range represents the pump speed, which can be transmitted by the heating boiler (2) to the pump (6) and/or can be transmitted by the pump (6) to the heating boiler (2).

7. System according to one of Claims 5 or 6,
**characterized in that** the delivery head, the flow, a room temperature or the power stage of the pump (6) is represented by a sub-range.

8. System according to one of Claims 5 to 7,
**characterized in that** alongside the sub-ranges are separation zones (10, 11), their assigned pulse width or frequency representing specific states, particularly faults.

9. System according to one of Claims 5 to 8,
**characterized in that** the heating boiler (2) communicates with a plurality of pumps (6), a separate pump (6) being specifically associated with an individual room (1) and being used for supplying a radiator (4) in said room with hot water.

## Revendications

1. Procédé de communication entre deux appareils électroniques reliés par l'intermédiaire d'une ligne, un signal pulsé de fréquence prédéfinissable étant présent sur la ligne, dont la durée d'impulsion peut être choisie dans une plage entre un minimum et un maximum, la durée d'impulsion représentant la valeur d'une grandeur d'état à transmettre,
**caractérisé par le fait que** la plage entre le minimum et le maximum de la durée d'impulsion est divisée en au moins deux plages partielles discrètes et qu'une grandeur d'état est adjointe respectivement à chacune des plages partielles, la valeur d'une grandeur d'état étant représentée par la durée d'impulsion variable à l'intérieur de la plage partielle.

2. Procédé de communication entre deux appareils électroniques reliés par l'intermédiaire d'une ligne, un signal pulsé de fréquence prédéfinissable étant présent sur la ligne, dont la durée d'impulsion peut être choisie dans une plage entre un minimum et un maximum, la durée d'impulsion représentant la valeur d'une grandeur d'état à transmettre,
**caractérisé par le fait que** la plage de fréquence dans laquelle le signal est variable est divisée en au moins deux plages partielles discrètes et qu'une grandeur d'état est adjointe respectivement à chacune des plages partielles, la valeur d'une grandeur d'état étant représentée par la durée d'impulsion variable à l'intérieur de la plage partielle.

3. Procédé selon la revendication 1 ou 2,
**caractérisé par le fait que**, au bord d'une plage partielle, sont prévues des zones de séparation (10,11) auxquelles sont adjoints des états singuliers tels que des messages d'erreur.

4. Procédé selon l'une des revendications 1 à 3,
**caractérisé par le fait que** l'un des appareils électroniques est une chaudière (2) avec une électronique de commande et l'autre est une pompe de chauffage (6) asservie électroniquement.

5. Système avec un transmetteur de chaleur actif, en particulier une chaudière, et une pompe de liquide, dans lequel le transmetteur de chaleur et la pompe échangent des informations par l'intermédiaire d'une ligne de signaux à l'aide de signaux pulsés, les informations étant codées en la largeur d'impulsion,
**caractérisé par le fait que** la plage de largeurs d'impulsions possibles est divisée en plages partielles discrètes et/ou que la plage de fréquences dans laquelle le signal peut être transmis est divisée en plages partielles discrètes, une grandeur d'état déterminée étant adjointe à une zone partielle et la valeur de la grandeur d'état étant représentée par la durée d'impulsion variable à l'intérieur de la plage partielle.

6. Système selon la revendication 5,
**caractérisé par le fait qu'**une plage partielle représente la vitesse de rotation de la pompe qui peut être prédéfinissable à la pompe (6) par la chaudière (2) et/ou qui peut être transmise de la pompe (6) à la chaudière (2).

7. Système selon la revendication 5 ou 6,
**caractérisé par le fait que** la hauteur de refoulement, le débit, une température ambiante ou l'étage de puissance de la pompe (6) est représenté par une plage partielle.

8. Système selon l'une des revendications 5 à 7,
**caractérisé par le fait que**, à côté des plages partielles, se trouvent des zones de séparation (10,11) dont la largeur d'impulsion ou la fréquence adjointe représente des états définis, en particulier des perturbations.

9. Système selon l'une des revendications 5 à 8,
**caractérisé par le fait que** la chaudière (2) communique avec plusieurs pompes (6), en particulier un volume (1) individuel étant adjoint à une pompe (6) particulière qui est mise en oeuvre pour alimenter en eau chaude un radiateur (2) se trouvant dans le volume.
